(19) **Europäisches Patentamt**
**European Patent Office**
**Office européen des brevets**

(11) **EP 4 044 526 B1**

(12) **EUROPEAN PATENT SPECIFICATION**

(45) Date of publication and mention
of the grant of the patent:
**24.07.2024 Bulletin 2024/30**

(21) Application number: **21157480.1**

(22) Date of filing: **16.02.2021**

(51) International Patent Classification (IPC):
*H04W 28/08* (2023.01)   *H04W 36/00* (2009.01)
*H04L 43/0829* (2022.01)   *H04W 28/086* (2023.01)
*H04W 72/542* (2023.01)   *H04L 43/0852* (2022.01)
*H04L 43/0864* (2022.01)

(52) Cooperative Patent Classification (CPC):
**H04W 28/0865; H04L 43/0829; H04L 43/0858;**
**H04L 43/0864; H04W 28/09; H04W 36/0027;**
**H04W 72/542;** H04L 43/0876; H04L 43/16;
H04L 45/24; H04L 47/29; H04W 36/385

(54) **TECHNIQUES FOR AN EFFICIENT USE OF REDUNDANT MULTIPATH SCHEDULING**

TECHNIKEN ZUR EFFIZIENTEN NUTZUNG REDUNDANTER MEHRPFADPLANUNG

TECHNIQUES POUR UNE UTILISATION EFFICACE DE LA PROGRAMMATION REDONDANTE À
TRAJETS MULTIPLES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**17.08.2022 Bulletin 2022/33**

(73) Proprietor: **Deutsche Telekom AG**
**53113 Bonn (DE)**

(72) Inventor: **AMEND, Markus**
**63667 Nidda (DE)**

(74) Representative: **Braun-Dullaeus Pannen**
**Emmerling**
**Patent- & Rechtsanwaltspartnerschaft mbB**
**Platz der Ideen 2**
**40476 Düsseldorf (DE)**

(56) References cited:
**EP-A2- 2 665 309**   **US-A1- 2005 059 400**
**US-A1- 2012 315 905**   **US-B1- 8 243 679**

- **CATT: "Measurement in CA", 3GPP DRAFT;**
**R2-095485, 3RD GENERATION PARTNERSHIP**
**PROJECT (3GPP), MOBILE COMPETENCE**
**CENTRE ; 650, ROUTE DES LUCIOLES ; F-06921**
**SOPHIA-ANTIPOLIS CEDEX ; FRANCE, no.**
**Miyazaki; 20091012, 16 October 2009**
**(2009-10-16), XP050390041**
- **KRISTIANSSON J ET AL: "Application-layer**
**mobility support for streaming real-time media",**
**WIRELESS COMMUNICATIONS AND**
**NETWORKING CONFERENCE, 2004. WCNC.**
**2004 IE EE ATLANTA, GA, USA 21-25 MARCH**
**2004, PISCATAWAY, NJ, USA,IEEE, vol. 1, 21**
**March 2004 (2004-03-21), pages 268 - 273,**
**XP010708081, ISBN: 978-0-7803-8344-9**

EP 4 044 526 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

The invention relates to techniques for an efficient use of redundant multipath scheduling in communication networks. In particular, the invention relates to an efficient implementation of redundant multipath scheduling in case of problems concerning the network performance of at least one data path of the communication network.

Redundant scheduler or scheduler that are configured to operate in a redundant data transfer mode are known in the state of the art. A list of references that describe redundant scheduling is provided at the end of the description. Redundant scheduling is described in the context of MPTCP, (MP-)QUIC, (CMT)-SCTP and MP-DCCP. The basic principle of redundant scheduling is very simple. If there is a multipath scenario with at least a first and a second data path, the redundant scheduler duplicates each data packet that shall be transmitted to another network entity before transmission and then distributes one of the duplicates to the first data path and the other duplicate to the second data path. This enhances the probability that the receiving network entity actually gets at least one of these data packets.

It follows that continues redundancy yields the highest reliability in case of communication loss of one path or disturbance in one or multiple paths or focuses on shortest possible transmission times. On the downside, it has the highest capacity demands. Stated in a more abstract way: That means the overall capacity

$$C_{overall} = \sum_{i=1}^{N} C_i$$ with $N$ denoting the number of paths and $C_i$ the capacity of path $i$ in the multipath bundle is reduced for equal paths at least to

$$\frac{\sum_{i=1}^{N} C_i}{N}$$

or in case of heterogeneous paths to

$$\max(C_1, \ldots, C_N)$$

or even to

$$\min(C_1, \ldots, C_N)$$

depending on how the redundancy logic is applied.

Hence, it can happen that the multipath communication system is "flooded" with redundant data all the time, even if this is not required with respect to network performance for a user.

In this context, EP 2 665 309 A2 shows a non-transitory processor-readable medium includes code to cause a processor to receive at a tunnel server, a data unit addressed to a communication device, and define, a first instance of the data unit and a second instance of the data unit. The first instance of the data unit is sent to the communication device via a first tunnel defined between at least the tunnel server and a first base station associated with a first network. The second instance of the data unit is sent to the communication device via a second tunnel defined between at least the tunnel server and a second base station associated with a second network. The second instance of the data unit is dropped by the communication device when the first instance of the data unit is received before the second instance of the data unit.

In the view of above, it is an object of the invention to provide techniques to enable an efficient use of redundant scheduling in multipath communication networks.

This object is solved by the features of the independent claims.

The features of the various aspects of the invention described below or the various examples of implementation may be combined with each other, unless this is explicitly excluded or is technically impossible.

In the following a first data path and a second data path will be described. The first data path and the second data path rely on different transmission techniques and/or different in the data transmission protocols. In particular, the first path can be a Wi-Fi data path, wherein the second data path can be a cellular data path. For example, 3G, LTE and/or 5G transmission techniques can be implemented in the second data path. As a Wi-Fi data path can be cheaper than a cellular data path, the first data path can be selected as the primary data path for data transmission between a network entity and a multipath communication network.

According to a first aspect of the invention, a method is taught in claim 1 to provide sufficient level of network performance to a network entity communicating with a multipath communication network comprising a central server wherein the central server has an associated measuring unit; wherein the network entity comprises a multipath scheduler and at least a first communication interface to communicate over a first data path and a second communication interface to communicate over a second data path, wherein the multipath scheduler is designed to distribute data traffic of the network entity to the first and/or the second communication interface by

• Transmitting data traffic between the network entity and the communication network over the first data path by the multipath scheduler;

  o this means that the standard communication of the network entity is performed in single path transmission mode over a primary data path. This primary data path can be selected in advance and is typically the cheaper data path. In principle the cheaper data path is the one that uses only a small amount of communication resources of network provider;

- Measuring parameters of the data traffic over the first data path by a measuring unit;

    o the measuring unit can be implemented in the network entity and/or at suitable places within the communication network to assess the relevant measuring parameters that are related to the network performance of the respective data path, e.g. packet loss, round-trip time, latency, capacity, available bandwidth, consumed bandwidth, etc. of course, it is possible to use more than one measuring unit that can combine their respective measuring parameters;

- Determining a network performance value of the first data path by evaluating the measured parameters with an algorithm implemented on a computing unit;

    o the measuring parameters serve as input to the algorithm. The computing unit with the algorithm can be implemented within the network entity and/or on a server within the communication network. The algorithm is designed to determine the network performance by evaluating the measured parameters. To evaluate the actual network performance, the measuring parameters are frequently updated, preferably in timescales which are necessary in order to "react" to network performance fluctuations;

- Comparing the network performance value of the first data path with a required network performance threshold value by the algorithm and evaluating a temporal network performance;

    o the required network performance threshold value can be a minimal bandwidth value, a maximal latency and/or a maximal data loss rate etc. The required network performance threshold value can be pre-stored in a memory of the computer unit and/or can dynamically be assessed;
    o another indicator of possible network performance problems is the temporal network performance, which can be determined in typical time durations of the technical field, e.g. in seconds. If the network performance is falling with a certain sloop that is over a predefined threshold slope, this indicates that network performance problems are likely to occur in the near future.

- Generating a Handover-Trigger-Signal if the comparison yields that the network performance value is lower than the required network performance threshold value and if a slope of the temporal network performance is higher than a predefined threshold slope of the temporal network performance;

    o within the context of the invention: if the network performance values lower than the required network performance threshold value this means that the network performance is worse than required; the Handover-Trigger-Signal is being generated by the algorithm in combination with the computing unit so that this signal can be sent to other units within the network entity and/or within the communication network;

- Sending the Handover-Trigger-Signal to the multipath scheduler that activates on receiving the Handover-Trigger-Signal a redundant data traffic mode to support a hand-over process from the first data path to the second data path.

    o In the redundant data traffic mode each data packet is duplicated by the multipath scheduler and then the first duplicate is sent over the first data path and the second duplicate is sent over the second data path to another network entity within the communication network. The Handover-Trigger-Signal can be generated by an external server within the network and/or by the by the network entity itself. If the Handover-Trigger-Signal is generated by the external server, it is send to multipath scheduler of the network entity. If the Handover-Trigger-Signal is generated by the network entity it is send to the multipath scheduler of the network entity by means of internal communication paths of the network entity.

This provides the advantage that the redundant data traffic mode is only activated in case of a hand-over process from the first data path to the second data path where it is very likely that data loss occurs on the first data path. Hence, the invention enables a smooth hand-over process from one data path access interface to another. The hand-over process facilitates the change from using the first data path to using the second data path alone or together with the first data path in a multipath scenario if the first data path has performance problems. In an embodiment, the first data path, which is choosing as being the primary transmission data path, uses Wi-Fi data communication techniques, wherein the second data path uses cellular data communication techniques. It is to be understood that the primary data path is the prioritized data path, in other words the first choice that the network entity uses to transmit its data. The invention enables a smooth hand-over process from one access to another. Up to the point of the invention, a redundant scheduler, which is specifically designed to provide single path transmission but also enables a smooth handover from one data path to the other, is not known. The smooth hand-over process yields to a minimum impact on a data packet loss or delay of the transmission.

After the hand-over process is finished, the network entities of the second data path can generate a signal hand-over-finish signal and transmit this to a multipath scheduler, which then returns to single path transmission while using only the second data path. Hence, the invention provides almost all benefits from redundant multipath scheduling while keeping network resource consumption at a low level. In another embodiment, the multipath scheduler can detect by its self that the hand-over process is finished and return to single path transmission. Basically, the switching from the first data path to the second data path can be facilitated in both ways in the ping-pong manner. Every time the measurement unit detects that the actual used single data path has a low network performance, the hand-over process to the other data path is initiated and redundant multipath scheduling activated to enable smooth handover process.

In an embodiment, the network entity activates on receiving the Handover-Trigger-Signal the hand-over process. This provides the advantage that both the network entity and the multipath scheduler are triggered to start the handover process based on the same signal. This enables a smooth cooperation process of the multipath scheduler and network entity when the both switch to multipath transmission. Of course, the network entity comprises the multipath scheduler, but apart from the multipath scheduler there are other parts of the network entity that also need to be activated to perform the hand-over process. The network entity can be a user equipment like a smartphone, a server and/or residential gateway. The Handover-Trigger-Signal can be generated by another network entity within the communication network or by the network entity itself.

In an embodiment, the measuring unit measures data traffic parameters of the second data path, and the algorithm determines a network performance value of the second data path by evaluating the measured parameters of the second data path. This provides the advantage that the network performance of the second data path can also be assessed. In particular, this provides the advantage that the network performance of the second data path can also be measured even if the second data path is not being used actively. The measured parameters can be transmitted to a central server to evaluate the network performance of the second data path. Hence, this enables a complete picture of the available network performances that the network entity could potentially use.

In an embodiment, the algorithm compares the network performance value of the first data path and the network performance value of the second data path and generates the Handover-Trigger-Signal if the network performance of the second data path is better than of the first data path. This provides the advantage that no switching to another data path takes place if this other data path has a lower network performance then the data path that is currently used.

Preferably, the redundant data traffic mode is deactivated by the multipath scheduler after finishing of the hand over process. This provides the advantage that the multipath scheduler can efficiently return to a single transmission mode which saves network and/or network entity resources.

In an embodiment, a further Handover-Trigger-Signal is generated if the network performance value of the first data path is higher than network performance value of the second data path. This provides the advantage, that the network entity can return to the second mode transmission by only using the first data path, which is usually is cheaper data path, if the comparison of the network performance value between the first data path and the second data path yields that currently the first data path provides better or acceptable network performance.

In an embodiment, the further Handover-Trigger-Signal is generated if the network performance value of the first data path is higher than a further required network performance threshold value, wherein the further required network performance threshold value is higher, e.g. by 10%, than the previous required network performance threshold value. This is a kind of "hysteresis" effect that avoids that multipath scheduler switches in the ping-pong like from the first data path to the second data path if the network performance of the first data path fluctuates around the required network performance threshold value.

In an embodiment, the measuring unit is associated to the network entity and/or to a central server of the communication network, wherein the Handover-Trigger-Signal can be generated by the network entity and/or by the central server of the communication system. In an embodiment, the central server transmits the Handover-Trigger-Signal to other network entities of the communication network using the same first data path as the network entity.

If the measuring unit is associated to the network entity, this provides the advantage that the network entity can evaluate independently on its own if a Handover-Trigger-Signal should be generated. If the measuring unit is associated to a central server of the communication network, this provides the advantage that in general such an implementation has a more general overview of network resources and performance. In addition, the central server can send the Handover-Trigger-Signal to multiple network entities that have the same communication environment as the network entity, which provides an efficient way to distribute the Handover-Trigger-Signal.

In an embodiment, the required network performance threshold value is dynamically adjusted. This provides the advantage that the required network performance threshold can be based on currently used services by the network entity that have different network performance demands. If the service has lower network performance demands, the required network performance threshold is lowered so that the redundant data traffic mode might not be activated at all, which saves computational resources.

In an embodiment, the adjustment of the required network performance threshold value is based on previous hand-over process. Evaluation of previous hand-over processes, which can be performed by either the network entity and/or central server, can yield that the redundant data traffic mode was started too early or too late to either safe network resources efficiently or to guarantee a satisfying user experience. By adjusting the required network performance threshold value based on these previous hand-over processes the optimal time for starting the redundant data traffic mode can be set.

In an embodiment, the measuring unit frequently measures the performance of the first and/or the second data path. This provides the advantage that the knowledge about the network performance is regularly updated so that the methods can be executed very efficiently. For example, the measuring units measure the performance of the first and/or the second data path once or multiple times every second.

According to a non-claimed aspect a multipath scheduler for distributing data traffic over at least a first and second data path of a multipath communication network is provided, wherein the multipath scheduler is configured to execute the method described above, and wherein the multipath scheduler comprises:

- a first data interface to communicate with the first data path;
- a second data interface to communicate with a second data path;
- a computing unit with an implemented algorithm that is configured to

  o determine a network performance value of the first data path by evaluating measured parameters of the first data path received over the first and/or all the second data interface, wherein the algorithm is configured to compare the network performance value of the first data path with a required network performance threshold value by the algorithm; wherein the algorithm is configured to activate a redundant traffic mode to support a hand-over process from the first data path to the second data path if the comparison yields that the network performance value is lower than the required network performance threshold value; and/or

- process a Handover-Trigger-Signal transmitted to the multipath scheduler over the first and/or the second data path, wherein algorithm is configured to activate a redundant traffic mode to support a hand-over process from the first data path to the second data path due to the Handover-Trigger-Signal.

  ▪ In this alternative, the Handover-Trigger-Signal can be generated by the central server within the communication network so that the multipath scheduler can activate the redundant traffic mode only based on receiving that signal.

This basically provides the same advantages as the method that was described above.

According to a third aspect of the invention, a multipath communication network system is provided, wherein the multipath communication network is configured to perform the method of claim 1.

This basically provides the same advantages as the method that was described above.

In the following, preferred implementation examples of the present invention are explained with reference to the accompanying figure:

Fig. 1: shows a multipath communication network system that is configured to execute the method according to the invention.

Fig. 2: shows a first version of an activation of a redundant data traffic mode by a multipath scheduler.

Fig. 3: shows a second version of an activation of a redundant data traffic mode by a multipath scheduler.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

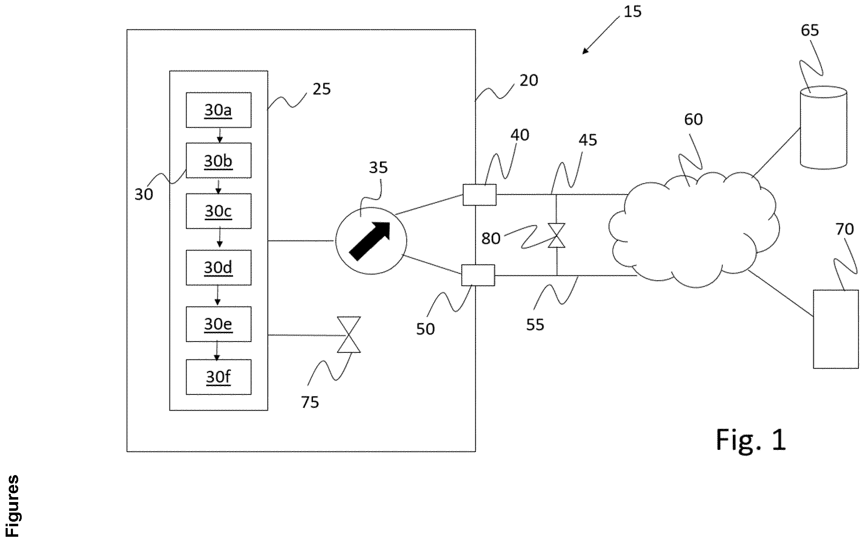

Fig. 1 shows a communication network system 15 that comprises a first network entity 20 that can be a smartphone, a tablet, a computer or in principle any other network capable device. The first network entity 20 comprises a computing unit 25, wherein an algorithm 30 is implemented to execute a method according to the invention. The computing unit 25 is connected to a multipath scheduler 35 of the first network entity 20 that access to a first communication interface 40 and a second communication interface 50 of the first network unit 20 and controls the data communication of the first network entity 20 is performed over a first data path 45 or a second data path 55. The first data path 45 can be a Wi-Fi data path, wherein the second data path 55 can be a cellular data path. The first data path 45 and the second data path 55 are connected to a communication network 60, in particular the Internet 60 or the ISP network 60, wherein other network capable devices are also connected to the communication network 60. In Fig. 1 a central server 65 and another network entity 70 are connected to the communication network 60. Fig. 1 also shows a first measuring unit 75 that is implemented in the network entity 20, wherein a second measuring entity 80 is located within the communication network 60 so that it can measure performance parameters of the first data path 45 and/or the second data path 55. The first measuring unit 75 can measure performance parameters of the first data path 45 and the second data path 55 by accessing the first communication interface 40 and/or the second communication interface 50.

The workflow of the method and the functioning of the network entity can be as follows:

- Step 30a: Transmitting data traffic over the first data path 45 by the multipath scheduler;

- Step 30b: Measuring parameters of the data traffic over the first data path 45 by at least one of the measuring units 75, 80;

- Step 30c: Determining a network performance value of the first data path 45 by evaluating the measured parameters by the algorithm 30 implemented on a computing unit 25;

- Step 30d: Comparing the network performance value of the first data path 45 with a required network performance threshold value by the algorithm 30;

- Step 30e: Generating a Handover-Trigger-Signal if the comparison yields that the network performance value is lower than the required network performance threshold value;

- Step 30f: Sending the Handover-Trigger-Signal to the multipath scheduler 35 that activates on receiving the Handover-Trigger-Signal a redundant data traffic mode to support a hand-over process from the first data path 45 to the second data path 55.

This provides the advantage that the redundant data traffic mode is only activated in case of a hand-over process from the first data path 45 to the second data path 55 where it is most likely that data loss occurs. Hence, the invention enables a smooth hand-over process from one data path access interface to another. The hand-over process facilitates the change from using the first data path 45 as a single transmission mode to using the second data path 55 as a single transmission mode if the first data path 45 has performance problems.

The network entity 20 can communicate over the communication network 60 with the central server 65 and/or the other network entity 70. The Handover-Trigger-Signal can be generated by the network entity 20 itself and/or by the central server 65. If the Handover-Trigger-Signal is generated by the central server then the signal needs to be transmitted over the communication network 60 to the network entity 20, so that the signal can be processed by the multipath scheduler 35.

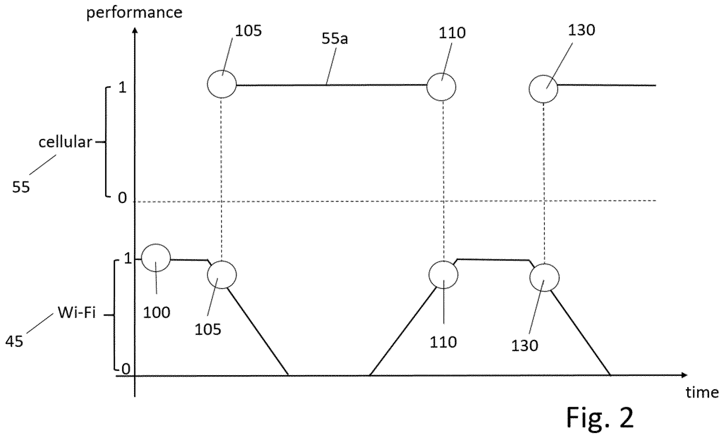

Fig. 2 shows a first version of an activation of a redundant data traffic mode by a multipath scheduler. It shows the different activities states of the first data path and the second data path over time, which is the horizontal axis. The vertical axis indicates a performance level of each data path, wherein the value zero indicates that there is basically no performance at all, in other words the data path is totally malfunctioning, and wherein the value one indicates that the performance level is basically perfect. The circles can indicate time points in which the network performance of the respective path is being measured by one of the measuring units 75, 80.

The Wi-Fi path 45 is being selected as the primary transmission path and the cellular path 55 as the secondary path. At time point 100, the evaluation of the measuring parameters yields that the Wi-Fi data path 45 has no problems so that the communication continues by using only the Wi-Fi path 45 in single transmission mode. At time point 105, the evaluation of the measuring parameters yields that the Wi-Fi data path shows a decreased performance level. If the network performance value of the Wi-Fi data path 45 is lower than a required network performance threshold value, then a performance indicator generates the Handover-Trigger-Signal. In this case, the multipath scheduler 35 replicates received data to schedule it across all available paths in the multipath bundle, including the Wi-Fi path 45. This ensures the best possible smooth hand-over from the Wi-Fi path 45 to the cellular path 55 even if the network performance of the Wi-Fi path 45 continues to decrease. The steepness of the slope of the Wi-Fi path 45 performance can be another factor that influences when the handover signal is being generated. In particular, the switching from the primary data path, i.e. Wi-Fi path 45, to the back-up data path, i.e. the cellular data path 55, is performed if the slope of the Wi-Fi path 45 has a negative value. The replicated/duplicated data 55a on the cellular path 55 keeps the communication of the network entity 20 with a communication network 60 "alive".

The replicated transmission can stop if the hand-over process is finished and the cellular data path 55 has network performance over a predefined performance threshold. In another version the replicated transmission continues until the data transmission is switched back to the Wi-Fi path 45.

At time point 110, the evaluation of the measuring parameters yields that the Wi-Fi data 45 path shows sufficient network performance value so that a second hand-over process is started to switch the data transmission back to the Wi-Fi path 45. After successful switching to the Wi-Fi data path 45 and single transmission mode, the replicated transmission is stopped by the multipath scheduler 35. The steepness of the slope of the Wi-Fi path 45 performance can be another factor that influences when the handover signal is being generated. In particular, the switching from the cellular data path 55 to the Wi-Fi data path 45 is performed if the slope of the Wi-Fi path 45 has a positive value.

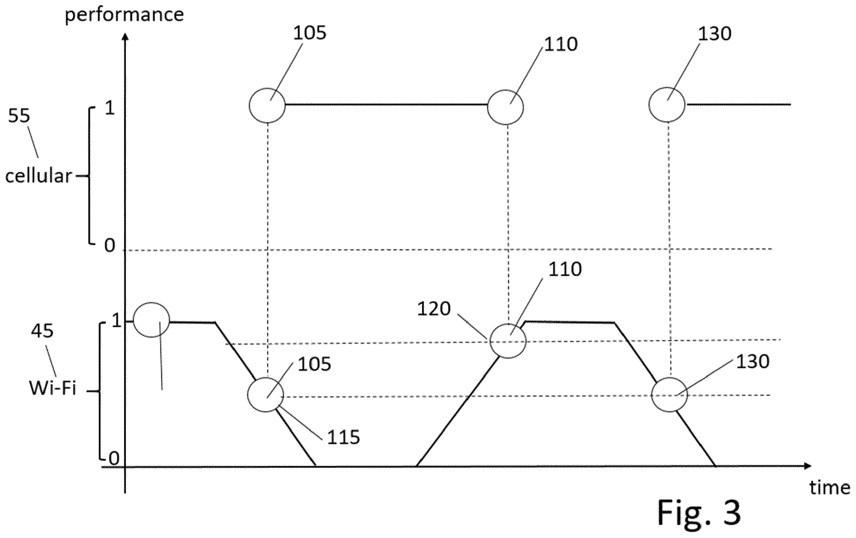

Fig. 3 shows a second version of an activation of a redundant data traffic mode by the multipath scheduler 35. The difference between Fig. 2 and Fig. 3 is that the required network performance threshold value is set to different values depending on if the switching of the data transmission goes from the first data path 45 to the second data path 55, i.e. the required network performance threshold value 115, or from the second data path 55 two the first data path 45, i.e. the required network performance threshold value 120. This introduces a kind of is hysteresis effect which prevents a switching in a ping-pong like matter between the two data paths if the network performance of the first data path fluctuates around the required network performance threshold value 115.

In the following, the foregoing description of Figures 2 and 3 is stated in a more abstract way: The performance indicator, which is responsible to trigger the smooth hand over implements a threshold logic to evaluate the performance of the primary path. As long as the threshold is exceeded, the data is solely forwarded on the primary path, this changes, when the performance has fallen below the threshold. Only in this case, data replication is activated by the multipath scheduler 35 across the multiple paths. For the time duration, when the network performance of the primary path is not sufficient, that helps to stabilize the communication system 60. If the primary path is not capable to send any data, the replication of data basically turns to a single path transmission as seen in fig. 2 between the time points 105 and 110.

A performance indicator of the measuring units and/or the algorithm on the computing unit 25 and/or on the central server 65 can use the following information to evaluate the network performance of the data paths: Preferably, the network performance is dynamically determined based on actual requirements like service demands that the network entity actual uses or plans to use. The network performance and/or the threshold values are therefore derived from detected services and/or communicated from the service itself and/or from the access interfaces and/or can be assessed by path capabilities. Such path capabilities can be: a modulation scheme, RSRP, RSRQ, RSSI, SINR. In addition, it is possible to use information from the connected access network 60 and/or from previous measurements and/or monitoring of previous hand-over processes and/or congestion control (cwnd, data packet loss, RTT) and/or latency measurements (OWL, RTT) to evaluate network performance.

The dynamic threshold is either maintained generally or individually on an access/path basis. It is further possible that the hand-over trigger points 105, 110, 130 that are derived from the threshold or the thresholds themselves can change over time. For example, the handover from the primary path to the secondary path will be triggered at certain loss rates, but requires for change back a lower loss rate as to avoid a ping-pong effect.

The general data forwarding strategy of the multipath scheduler 35 is independent from any restriction given by the transport protocol, interface access or interface capabilities. However, in a further embodiment, the multipath scheduler 35 can be configured to take such values across paths or individual paths into account. In consequence, the path with the best performance settings will dominate the scheduler forwarding capabilities.

For a multipath communication system with more than two paths, redundancy is either applied on the primary path and selected secondary path are applied universally across all paths.

## References

- Vu Anh Vu and Brenton Walker. 2019. Redundant Multipath-TCP Scheduling with Desired Packet Latency. In Proceedings of the 14th Workshop on Challenged Networks (CHANTS'19). Association for Computing Machinery, New York, NY, USA, 7-12. DOI:https://doi.org/10.1145/3349625.3355440;

- Yihua Ethan Guo, Ashkan Nikravesh, Z. Morley Mao, Feng Qian, and Subhabrata Sen. 2017. Accelerating Multipath Transport Through Balanced Subflow Completion. In Proceedings of the 23rd Annual International Conference on Mobile Computing and Networking (MobiCom '17). Association for Computing Machinery, New York, NY, USA, 141-153. DOI:https:/ldoi.org/10.1145/3117811.3117829;

- Jing Zuo and Jianjian Zhu and Wei Liu, "A Path-Aware Scheduling Scheme for Multipath Transport Protocols", draft-zuo-mptcp-scheduler-01.txt, March 2018;

- B. Felix, I. Steuck, A. Santos, S. Secci and M. Nogueira, "Redundant Packet Scheduling by Uncorrelated Paths in Heterogeneous Wireless Networks," 2018 IEEE Symposium on Computers and Communications (ISCC), Natal, 2018, pp. 00498-00503, doi: 10.1109/ISCC.2018.8538641;

- Redundant scheduler from MPTCP Linux reference implementation, https://github.com/multipath-tcp/mptcp/blob/mptcp v0.95/net/mptcp/mptcp_redundant.c;

- Alexander Frömmgen, Amr Rizk, Tobias Erbshäußer, Max Weller, Boris Koldehofe, Alejandro Buchmann, and Ralf Steinmetz. 2017. A programming model for application-defined multipath TCP scheduling. In Proceedings of the 18th ACM/IFIP/USENIX Middleware Conference (Middleware '17). Association for Computing Machinery, New York, NY, USA, 134-146. DOI:https://doi.org/10.1145/3135974.3135979;

• A. Ford and C. Raiciu and M. Handley and O. Bonaventure, "TCP Extensions for Multipath Operation with Multiple Addresses", RFC no. 6824, January 2013;

• J. Iyengar and M. Thomson, "QUIC: A UDP-Based Multiplexed and Secure Transport"draft-ietf-quic-transport-32, October 2020;

• Quentin Coninck and Olivier Bonaventure, "Multipath Extensions for QUIC (MP-QUIC)", draft-deconinck-quic-multipath-05, August 2020;

• R. Stewart, "Stream Control Transmission Protocol", RFC no. 4960, September 2007;

• Paul Amer and Martin Becke and Thomas Dreibholz and Nasif Ekiz and Jana Iyengar and Preethi Natarajan and Randall Stewart and Michael Tüxen, "Load Sharing for the Stream Control Transmission Protocol (SCTP)", draft-tuexen-tsvwg-sctp-multipath-20, July 2020;

• Markus Amend and Anna Brunstrom and Andreas Kassler and Veselin Rakocevic, "DCCP Extensions for Multipath Operation with Multiple Addresses", draft-amend-tsvwg-multipath-dccp-03, Nov 2019;

**Acronyms**

| MPTCP: | multi path transmission control protocol; |
| RSRP: | reference signals received power; |
| RSRQ: | reference signal received quality; |
| RSSI: | received signal strength indication; |
| SINR: | signal to interference plus noise ratio; |
| Cwnd: | Congestion WiNDow; |
| RTT: | round trip time; |
| OWL | one way latency; |

**Claims**

1. A method to provide a sufficient level of network performance to a network entity (20) communicating with a multipath communication network (60), wherein the network entity (20) comprises a multipath scheduler (35) and at least a first communication interface (40) to communicate over a first data path (45) and a second communication interface (50) to communicate over a second data path (55), wherein the multipath scheduler (35) is designed to distribute data traffic of the network entity (20) to the first and/or the second communication interface (40, 50), wherein the method comprises the following step:

   • Transmitting data traffic over the first data path (45) by the multipath scheduler (35); wherein the method further comprises the following steps performed all by either the network entity (20) or by a central server (65) of the multipath communication network (60) respectively:
   • Measuring parameters of the data traffic over the first data path (45) by a measuring unit (75, 80), wherein the measuring unit (80) is associated with the central server (65) or the measuring unit (75) is associated with the network entity (20);
   • Determining a network performance value of the first data path (45) by evaluating the measured parameters by an algorithm (30) implemented on a computing unit (25) of the network entity (20) or of the central server (65);
   • Comparing the network performance value of the first data path (45) with a required network performance threshold value (115) by the algorithm (30) and evaluating a temporal network performance;
   • Generating a Handover-Trigger-Signal if the comparison yields that the network performance value is lower than the required network performance threshold value (115) and if a slope of the temporal network performance is higher than a predefined threshold slope of the temporal network performance;
   • Sending the Handover-Trigger-Signal to the multipath scheduler (35) that activates on receiving the Handover-Trigger-Signal a redundant data traffic mode to support a hand-over process from the first data path (45) to the second data path (55).

2. The method of claim 1, wherein the network entity (20) activates on receiving the Handover-Trigger-Signal the hand-over process.

3. The method of any of the claims, wherein the measuring unit measures data traffic parameters of the second data path (55), and wherein an algorithm (30) determines a network performance value of the second data path (55) by evaluating the measured parameters of the second data path (55).

4. The method of claim 3, wherein the algorithm (30) compares the network performance value of the first data path (45) and of the second data path (55) and generates the Handover-Trigger-Signal if the network performance of the second data path (55) is better than of the first data path (45).

5. The method of any of the claims, wherein the redundant data traffic mode is deactivated by the multipath scheduler (35) after finishing of the hand over process.

6. The method of any of the claims, wherein a further Handover-Trigger-Signal is generated if the network performance value of the first data path (45) is higher than the network performance value of the second data path (55).

7. The method of any of the claims, wherein the further Handover-Trigger-Signal is generated if the network performance value of the first data path (45) is higher than a further required network performance threshold value (115), wherein the further required network performance threshold value (115) is higher than the previous required network performance threshold value (115).

8. The method of any of the claims, wherein the Handover-Trigger-Signal is generated by the network entity (20) or by the central server (65) of the communication system.

9. The method of claim 8, wherein central server (65) transmits the Handover-Trigger-Signal to other network entities of the communication network using the same first data path (45) and/or second data path (55) as the network entity (20).

10. The method of any of the claims, wherein the required network performance threshold value (115) is dynamically adjusted.

11. The method of claim 10, wherein the adjustment of the required network performance threshold value (115) is based on previous hand-over process.

12. The method of any of the claims, wherein the measuring unit frequently measures the performance of the first and/or the second data path (45, 55).

13. A network entity (20) comprising a multipath scheduler (35) for distributing data traffic over at least a first and second data path (45, 55) of a multipath communication network (60), wherein the network entity (20) further comprises:

    • a first data interface to communicate with the first data path (45);
    • a second data interface to communicate with a second data path (55);
    • a computing unit (25) with an implemented algorithm (30) that is configured to
    • determine a network performance value of the first data path (45) by evaluating measured parameters of the first data path (45) received over the first and/or the second data interface, wherein the algorithm (30) is configured to compare the network performance value of the first data path (45) with a required network performance threshold value (115) by the algorithm (30) and to evalute a temporal network performance of the first data path (45); wherein the algorithm (30) is configured to generate a Handover-Trigger-Signal and to transmit the Handover-Trigger-Signal to the multipath scheduler (35) to activate a redundant traffic mode to support a hand-over process from the first data path (45) to the second data path (55) if the comparison yields that the network performance value is lower than the required network performance threshold value (115) and if a slope of the temporal network performance is higher than a predefined threshold slope of the temporal network performance.

14. A multipath communication network (60) system being configured to perform the method according to any of the claims 1-12.

**Patentansprüche**

1. Verfahren zum Bereitstellen eines hinreichenden Niveaus an Netzwerkleistung an eine Netzwerkentität (20), die mit einem Multipfad-Kommunikationsnetzwerk (60) kommuniziert, wobei die Netzwerkentität (20) eine Multipfad-Steuereinheit (35) und mindestens eine erste Kommunikationsschnittstelle (40) zum Kommunizieren über einen ersten Datenpfad (45) und eine zweite Kommunikationsschnittstelle (50) zum Kommunizieren über einen zweiten Datenpfad (55) aufweist, wobei die Multipfad-Steuereinheit (35) dazu eingerichtet ist, Datenverkehr der Netzwerkentität (20) an die erste und/oder die zweite Kommunikationsschnittstelle (40, 50) zu verteilen, wobei das Verfahren den folgenden Schritt umfasst:

    - Übertragen von Datenverkehr über den ersten Datenpfad (45) durch die Multipfad-Steuereinheit (35); wobei das Verfahren ferner die folgenden Schritte umfasst, die alle jeweils entweder durch die Netzwerkentität (20) oder durch einen zentralen Server (65) des Multipfad-Kommunikationsnetzwerks (60) durchgeführt werden:
    - Messen von Parametern des Datenverkehrs über den ersten Datenpfad (45) durch eine Messeinheit (75, 80), wobei die Messeinheit (80) dem zentralen Server (65) zugehörig ist oder die Messeinheit (75) der Netzwerkentität (20) zugehörig ist;
    - Bestimmen eines Netzwerkleistungswerts des ersten Datenpfads (45) durch Evaluieren der gemessenen Parameter mittels eines Algorithmus (30), der auf einer Recheneinheit (25) der Netzwerkentität (20) oder des zentralen Servers (65) implementiert ist;

- Vergleichen des Netzwerkleistungswerts des ersten Datenpfads (45) mit einem erforderlichen Netzwerkleistungs-Schwellwert (115) durch den Algorithmus (30) und Evaluieren einer zeitabhängigen Netzwerkleistung;

- Erzeugen eines Handover-Auslöse-Signals, falls der Vergleich ergibt, dass der Netzwerkleistungswert niedriger als der erforderliche Netzwerkleistungs-Schwellwert (115) ist, und falls eine Steigung der zeitabhängigen Netzwerkleistung höher als ein vordefinierter Steigungsschwellwert der zeitabhängigen Netzwerkleistung ist;

- Senden des Handover-Auslöse-Signals an die Multipfad-Steuereinheit (35), die bei Empfang des Handover-Auslöse-Signals einen redundanten Datenverkehrsmodus aktiviert, um einen Handover-Vorgang von dem ersten Datenpfad (45) zu dem zweiten Datenpfad (55) zu unterstützen.

2. Verfahren nach Anspruch 1, wobei die Netzwerkentität (20) bei Empfang des Handover-Auslöse-Signals den Handover-Prozess aktiviert.

3. Verfahren nach einem der Ansprüche, wobei die Messeinheit Datenverkehrsparameter des zweiten Datenpfads (55) misst, und wobei ein Algorithmus (30) durch Auswerten der gemessenen Parameter des zweiten Datenpfads (55) einen Netzwerkleistungswert des zweiten Datenpfads (55) bestimmt.

4. Verfahren nach Anspruch 3, wobei der Algorithmus (30) den Netzwerkleistungswert des ersten Datenpfads (45) und des zweiten Datenpfads (55) vergleicht und das Handover-Auslöse-Signal generiert, falls die Netzwerkleistung des zweiten Datenpfads (55) besser als die des ersten Datenpfads (45) ist.

5. Verfahren nach einem der Ansprüche, wobei der redundante Datenverkehrsmodus von der Multipfad-Steuereinheit (35) nach Abschluss des Handover-Vorgangs deaktiviert wird.

6. Verfahren nach einem der Ansprüche, wobei ein weiteres Handover-Auslöse-Signal generiert wird, falls der Netzwerkleistungswert des ersten Datenpfads (45) höher als der Netzwerkleistungswert des zweiten Datenpfads (55) ist.

7. Verfahren nach einem der Ansprüche, wobei das weitere Handover-Auslöse-Signal generiert wird, falls der Netzwerkleistungswert des ersten Datenpfads (45) höher als ein weiterer erforderlicher Netzwerkleistungswert (115) ist, wobei der weitere erforderliche Netzwerkleistungswert (115) höher als der vorherige erforderliche Leistungsschwellwert (115) ist.

8. Verfahren nach einem der Ansprüche, wobei das Handover-Auslöse-Signal von der Netzwerkentität (20) oder von dem zentralen Server (65) des Kommunikationssystems erzeugt wird.

9. Verfahren nach Anspruch 8, wobei der zentrale Server (65) das Handover-Auslöse-Signal unter Verwendung desselben ersten Datenpfads (45) und/oder zweiten Datenpfads (55) wie die Netzwerkentität (20) an weitere Netzwerkentitäten des Kommunikationsnetzwerks überträgt.

10. Verfahren nach einem der Ansprüche, wobei der erforderliche Netzwerkleistungs-Schwellwert (115) dynamisch angepasst wird.

11. Verfahren nach Anspruch 10, wobei das Anpassen des erforderlichen Netzwerkleistungs-Schwellwerts (115) auf einem vorherigen Handover-Prozess beruht.

12. Verfahren nach einem der Ansprüche, wobei die Messeinheit die Leistung des ersten und/oder des zweiten Datenpfads (45, 55) häufig misst.

13. Netzwerkentität (20) mit einer Multipfad-Steuereinheit (35) zum Verteilen von Datenverkehr über mindestens einen ersten und einen zweiten Datenpfad (45, 55) eines Multipfad-Kommunikationsnetzwerks (60), wobei die Netzwerkentität (20) ferner aufweist:

- eine erste Datenschnittstelle zum Kommunizieren mit dem ersten Datenpfad (45);
- eine zweite Datenschnittstelle zum Kommunizieren mit einem zweiten Datenpfad (55);
- eine Recheneinheit (25) mit einem implementierten Algorithmus (30), der dazu eingerichtet ist:
- einen Netzwerkleistungswert des ersten Datenpfads (45) durch Evaluieren von über die erste und/oder die zweite Datenschnittstelle empfangenen, gemessenen Parametern des ersten Datenpfads (45) zu bestimmen, wobei der Algorithmus (30) dazu eingerichtet ist, den Netzwerkleistungswert des ersten Datenpfads (45) mit einem erforderlichen Netzwerkleistungs-Schwellwert (115) durch den Algorithmus (30) zu vergleichen und eine zeitabhängige Netzwerkleistung des ersten Netzwerkdatenpfads (45) zu evaluieren; wobei der Algorithmus (30) dazu eingerichtet ist, ein Handover-Auslöse-Signal zu erzeugen und das Handover-Auslöse-Signal an die Multipfad-Steuereinheit (35) zu übertragen, um einen redundanten Datenverkehrsmodus zu aktivieren, um einen Handover-Prozess von dem ersten Datenpfad (45) an den zweiten Datenpfad (55) zu unterstützen, falls der Vergleich ergibt, dass der Netzwerkleistungswert niedriger als der erforderliche Netzwerkleistungs-Schwellwert (115) ist, und falls eine Steigung der zeitabhängigen Netzwerkleistung höher als ein vordefinierter Steigungsschwellwert der zeitabhängigen Netzwerkleistung ist.

14. Multipfad-Kommunikationsnetzwerksystem (60), das dazu eingerichtet ist, das Verfahren nach einem der Ansprüche 1 bis 12 durchzuführen.

**Revendications**

1. Procédé pour fournir un niveau suffisant de performance de réseau à une entité de réseau (20) communiquant avec un réseau de communication à trajets multiples (60), dans lequel l'entité de réseau (20) comprend un planificateur à trajets multiples (35) et au moins une première interface de communication (40) pour communiquer sur un premier trajet de données (45) et une deuxième interface de communication (50) pour communiquer sur un deuxième trajet de données (55), dans lequel le planificateur à trajets multiples (35) est conçu pour distribuer le trafic de données de l'entité de réseau (20) à la première et/ou à la deuxième interface de communication (40, 50), dans lequel le procédé comprend l'étape suivante :

- transmission du trafic de données sur le premier trajet de données (45) par le planificateur à trajets multiples (35) ; dans lequel le procédé comprend en outre les étapes suivantes effectuées respectivement par l'entité de réseau (20) ou par un serveur central (65) du réseau de communication à trajets multiples (60) :
- mesure des paramètres du trafic de données sur le premier trajet de données (45) par une unité de mesure (75, 80), dans lequel l'unité de mesure (80) est associée au serveur central (65) ou l'unité de mesure (80) est associée à l'entité de réseau (20) ;
- détermination d'une valeur de performance de réseau du premier trajet de données (45) en évaluant les paramètres mesurés par un algorithme (30) mis en œuvre sur une unité de calcul (25) de l'entité de réseau (20) ou du serveur central (65) ;
- comparaison de la valeur de performance de réseau du premier trajet de données (45) avec une valeur de seuil de performance de réseau requise (115) par l'algorithme (30) et évaluation d'une performance de réseau temporelle ;
- génération d'un signal de déclenchement de transfert si la comparaison indique que la valeur de performance du réseau est inférieure à la valeur de seuil de performance du réseau requise (115) et si une pente de la performance temporelle du réseau est supérieure à une pente de seuil prédéfinie de la performance temporelle du réseau ;
- envoi du signal de déclenchement de transfert au planificateur à trajets multiples (35) qui active, à la réception du signal de déclenchement de transfert, un mode de trafic de données redondant pour prendre en charge un processus de transfert du premier trajet de données (45) au deuxième trajet de données (55).

2. Procédé selon la revendication 1, dans lequel l'entité de réseau (20) active, à la réception du signal de déclenchement de transfert, le processus de transfert.

3. Procédé selon une quelconque des revendications, dans lequel l'unité de mesure mesure des paramètres de trafic de données du deuxième trajet de données (55), et dans lequel un algorithme (30) détermine une valeur de performance de réseau du deuxième trajet de données (55) en évaluant les paramètres mesurés du deuxième trajet de données (55).

4. Procédé selon la revendication 3, dans lequel l'algorithme (30) compare la valeur de performance de réseau du premier trajet de données (45) et du deuxième trajet de données (55) et génère le signal de déclenchement de transfert si la performance de réseau du deuxième trajet de données (55) est meilleure que celle du premier trajet de données (45).

5. Procédé selon une quelconque des revendications, dans lequel le mode de trafic de données redondant est désactivé par le planificateur à trajets multiples (35) après la fin du processus de transfert.

6. Procédé selon une quelconque des revendications, dans lequel un autre signal de déclenchement de transfert est généré si la valeur de performance de réseau du premier trajet de données (45) est supérieure à la valeur de performance de réseau du deuxième trajet de données (55).

7. Procédé selon une quelconque des revendications, dans lequel l'autre signal de déclenchement de transfert est généré si la valeur de performance de réseau du premier trajet de données (45) est supérieure à une autre valeur de seuil de performance de réseau requise (115), dans lequel l'autre valeur de seuil de performance de réseau requise (115) est supérieure à la valeur de seuil de performance de réseau requise précédente (115).

8. Procédé selon une quelconque des revendications, dans lequel le signal de déclenchement de transfert est généré par l'entité de réseau (20) ou par le serveur central (65) du système de communication.

9. Procédé selon la revendication 8, dans lequel le serveur central (65) transmet le signal de déclenchement de transfert à d'autres entités de réseau du réseau de communication en utilisant le même premier trajet de données (45) et/ou le même deuxième trajet de données (55) que l'entité de réseau (20).

10. Procédé selon une quelconque des revendications, dans lequel la valeur de seuil de performance de réseau requise (115) est ajustée de manière dynamique.

11. Procédé selon la revendication 10, dans lequel l'ajustement de la valeur de seuil de performance de réseau requise (115) est basé sur le processus de transfert précédent.

12. Procédé selon une quelconque des revendications, dans lequel l'unité de mesure mesure fréquemment les performances du premier et/ou du deuxième trajet de données (45, 55).

13. Entité de réseau (20) comprenant un planificateur à trajets multiples (35) pour distribuer le trafic de données sur au moins un premier et un deuxième trajet de données (45, 55) d'un réseau de communication à trajets multiples (60), l'entité de réseau (20) comprenant en outre :

- une première interface de données pour communiquer avec le premier trajet de données (45) ;
- une deuxième interface de données pour communiquer avec un deuxième trajet de données (55) ;
- une unité de calcul (25) avec un algorithme implémenté (30) qui est configuré pour
- déterminer une valeur de performance de réseau du premier trajet de données (45) en évaluant des paramètres mesurés du premier trajet de données (45) reçus sur la première et/ou la deuxième interface de données, dans lequel l'algorithme (30) est configuré pour comparer la valeur de performance de réseau du premier trajet de données (45) avec une valeur de seuil de performance de réseau requise (115) par l'algorithme (30) et pour évaluer une performance de réseau temporelle du premier trajet de données (45) ; dans lequel l'algorithme (30) est configuré pour générer un signal de déclenchement de transfert et pour transmettre le signal de déclenchement de transfert au planificateur à trajets multiples (35) pour activer un mode de trafic redondant afin de prendre en charge un processus de transfert du premier trajet de données (45) au deuxième trajet de données (55) si la comparaison indique que la valeur de performance du réseau est inférieure à la valeur de seuil de performance du réseau requise (115) et si une pente de la performance temporelle du réseau est supérieure à une pente de seuil prédéfinie de la performance temporelle du réseau.

14. Système de réseau de communication à trajets multiples (60) configuré pour mettre en œuvre le procédé selon une quelconque des revendications 1 à 12.

**Figures**

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2665309 A2

### Non-patent literature cited in the description

- Redundant Multipath-TCP Scheduling with Desired Packet Latency. **VU ANH VU ; BRENTON WALKER.** Proceedings of the 14th Workshop on Challenged Networks (CHANTS'19). Association for Computing Machinery, 2019, 7-12
- Accelerating Multipath Transport Through Balanced Subflow Completion. **YIHUA ETHAN GUO ; ASHKAN NIKRAVESH ; Z. MORLEY MAO ; FENG QIAN ; SUBHABRATA SEN.** Proceedings of the 23rd Annual International Conference on Mobile Computing and Networking (MobiCom '17). Association for Computing Machinery, 2017, 141-153
- **JING ZUO ; JIANJIAN ZHU ; WEI LIU.** A Path-Aware Scheduling Scheme for Multipath Transport Protocols. *draft-zuo-mptcp-scheduler-01.txt,* March 2018
- **B. FELIX ; I. STEUCK ; A. SANTOS ; S. SECCI ; M. NOGUEIRA.** Redundant Packet Scheduling by Uncorrelated Paths in Heterogeneous Wireless Networks. *2018 IEEE Symposium on Computers and Communications (ISCC), Natal,* 2018, 00498-00503
- *Redundant scheduler from MPTCP Linux reference implementation, https://github.com/multipath-tcp/mptcp/blob/mptcp v0.95/net/mptcp/mptcp_redundant.c*
- A programming model for application-defined multipath TCP scheduling. **ALEXANDER FRÖMMGEN ; AMR RIZK ; TOBIAS ERBSHÄUßER ; MAX WELLER ; BORIS KOLDEHOFE ; ALEJANDRO BUCHMANN ; RALF STEINMETZ.** Proceedings of the 18th ACM/IFIP/USENIX Middleware Conference (Middleware '17). Association for Computing Machinery, 2017, 134-146
- **A. FORD ; C. RAICIU ; M. HANDLEY ; O. BONAVENTURE.** TCP Extensions for Multipath Operation with Multiple Addresses. *RFC,* January 2013, (6824
- **J. IYENGAR ; M. THOMSON.** QUIC: A UDP-Based Multiplexed and Secure Transport. *draft-ietf-quic-transport-32,* October 2020
- **QUENTIN CONINCK ; OLIVIER BONAVENTURE.** Multipath Extensions for QUIC (MP-QUIC). *draft-deconinck-quic-multipath-05,* August 2020
- **R. STEWART.** Stream Control Transmission Protocol. *RFC,* September 2007, (4960
- **PAUL AMER ; MARTIN BECKE ; THOMAS DREIBHOLZ ; NASIF EKIZ ; JANA IYENGAR ; PREETHI NATARAJAN ; RANDALL STEWART ; MICHAEL TÜXEN.** Load Sharing for the Stream Control Transmission Protocol (SCTP). *draft-tuexen-tsvwg-sctp-multipath-20,* July 2020
- **MARKUS AMEND ; ANNA BRUNSTROM ; ANDREAS KASSLER ; VESELIN RAKOCEVIC.** DCCP Extensions for Multipath Operation with Multiple Addresses. *draft-amend-tsvwg-multipath-dccp-03,* November 2019